# EUROPEAN PATENT SPECIFICATION

(11) **EP 3 921 128 B1**
(45) Date of publication and mention of the grant of the patent: **10.12.2025**
(21) Application number: 20705256.4
(22) Date of filing: 07.02.2020
(51) Int. Cl.: B29C 43/58, B65G 17/12, B65G 17/22, B65G 17/32, B65G 17/46

(54) **HANDLING APPARATUS AND METHOD**
HANDHABUNGSVORRICHTUNG UND VERFAHREN
DISPOSITIF DE MANIPULATION ET PROCÉDÉ

(30) Priority: 08.02.2019 IT 201900001871
(43) Date of publication of application: 15.12.2021
(73) Proprietor: SACMI COOPERATIVA MECCANICI IMOLA SOCIETA' COOPERATIVA, 40026 Imola (BO) (IT)
(72) Inventor: ALBONETTI, Danilo, 40026 Imola (BO) (IT)
(74) Representative: Luppi Intellectual Property S.r.l.
(86) International application number: PCT/IB2020/050983
(87) International publication number: WO 2020/161676

(56) References cited:
- US-A1- 2003 009 992
- US-A1- 2014 167 334
- US-A1- 2016 130 094
- US-B1- 8 276 741

## Description

The invention regards a handling apparatus which can be connected to a processing station for processing objects and a method for handling objects from the processing station to an inspection station thereof.

The invention can be applied to conveying closures of containers, for example caps and/or capsules for bottles, vessel lids and so on, in a line for the production of closures.

In particular, the container closures can be of the type commercially known as "ring pull caps", i.e. caps provided with a pull ring. The aforementioned caps can have a body made of a substantially metal alloy or aluminium or plastic material, they can be provided with a seal made of plastic material inside the body, and they are provided with a ring made of plastic or metallic material, connected to a portion of the body. The ring can be pulled by a user to remove the cap from the bottle in a simple way, without using dedicated tools.

It is known a handling apparatus which can be connected to a processing station by means of a conveyor element arranged upstream of an inspection station. The processing station in particular comprises a forming turntable for forming the plastic pull ring of ring pull caps, suitable to receive a body of the cap and provided with means for forming and connecting the plastic pull ring to the body. Downstream of the forming turntable, the processing station comprises a transfer turntable for the exit of the caps from the processing station.

The inspection station is provided with a high-resolution linear scan camera which is capable of identifying, by analysing one object at a time, any defects that may be present, for example colour variations or wrong colours, flaws, non-compliant shape, etc.

The conveyor element comprises a channel or duct arranged between the transfer turntable for transferring the objects and the inspection station, i.e. connected with one end to the transfer turntable which picks up the caps from the forming turntable and with another end to a supply belt for supplying the inspection station, the supply belt supplying the inspection station with the caps coming from the channel. The transfer turntable inserts each object into the channel at a predetermined speed. In the channel the caps advance in a row in mutual contact, in particular one pushes the other toward the inspection station. This conveying line of the prior art has some limitations and drawbacks.

Firstly, the advancement speed of the objects in the channel cannot be controlled, since each object advances by means of the thrust provided by the object preceding it. The mutual contact between the objects in the channel can also cause damage to the objects themselves, for example the caps can deform locally or become ovalized.

Secondly, the advancement of the objects in the channel toward the inspection station may not match the speed of the supply belt of the inspection station; thus picking up a single object, for example picking up a single cap, can become a particularly sensitive and difficult operation due to the excessive proximity between the objects.

In fact, it happens that a pair of very close caps is erroneously transferred from the channel to the supply belt and reaches the inspection camera, which analyses the aforementioned pair as if it were a "single object"; thus, the camera identifies a non-compliant object, identifying a size defect on the "single object". This means that the pair of caps is discarded as a faulty object.

Therefore, there arises the need to limit the risk of an erroneous reading of the objects by the camera in order to limit the discarding of objects free of defects, instead of being considered acceptable.

In the production of ring pull caps having a plastic pull ring, it is not uncommon for the compression moulded pull ring coming out of the forming turntable to comprise thin burrs formed during forming, due to molten plastic that has reached orifices present between the moulds. Once said burrs have solidified, being thin, they are sharp and can cause injuries to the user who grips the pull ring or in any case cause an unpleasant feeling to the touch besides appearing aesthetically unpleasant.

The frequency of this defect increases over time, as a result of the wear of the forming moulds, which causes the orifices present in the moulds to widen. Upon reaching the inspection station, these objects are discarded because they have a shape defect, thus the number of discarded objects increases as the forming turntable is used over the time.

US 2014/167334 Al discloses a handling apparatus for handling objects according to the prior art.

An object of the invention is to improve the known handling apparatuses which can be connected to processing stations of object for handling objects to an inspection station.

Another object is to reduce the number of objects recognised as faulty, and therefore discarded, solving one or more of the aforementioned limits and drawbacks of the prior art.

Still another object of the invention is to control the speed at which the objects advance in the handling apparatus.

A further object is to be able to control the speed of objects exiting from a processing station and entering into an inspection station of the known type.

Still a further object is to obtain a connection between a processing station and an inspection station that is relatively simple and that does not require substantial modifications to the existing processing station.

According to the invention a handling apparatus and a method for handling objects are provided as defined by the attached claims.

Owing to the invention it is possible to handle objects keeping them in a row at a predetermined distance from each other. This allows to reduce the risk of damaging the conveyed objects and makes it easier to connect a processing station in line with an inspection station of objects.

Owing to the invention, in particular owing to the holding means, it is also possible to pick up an object from a transfer turntable in coordination or in phase with the arrival of a seat of the transfer turntable and to release the aforementioned object in coordination or in phase with the departure of supply means of an inspection station. This allows to reduce the number of objects erroneously discarded in the inspection station.

Owing to the invention it is also possible to trace back, by means of a feedback control, the cause which led to a defect on the object, for example to trace back to a defect of a seat of the processing station which generated a shape defect on the analysed object and which is then discarded in the inspection station.

Furthermore, providing a finishing unit crossed by a conveying member which keeps the objects in a row at a predetermined mutual distance, in particular constant, allows to reduce the number of objects having a shape defect, such as for example a forming burr, in the case where the object comprises plastic parts formed by moulding.

The invention may be better understood and implemented with reference to the attached drawings which illustrate exemplary and non-limiting embodiments, wherein:
Figure 1 is a perspective view of a handling apparatus connecting a processing station, comprising a transfer turntable, and an inspection station;
Figure 2 is an enlarged view of the handling apparatus of Figure 1, in which the handling apparatus is without a protection guard;
Figure 3 is a perspective view of a ring pull cap, which can be conveyed by the handling apparatus of Figure 1;
Figure 4 is a perspective view of an input area of the handling apparatus of Figure 1;
Figures 5 and 6 are enlarged perspective views of details of Figure 4, showing pick-up/release elements provided in the handling apparatus for picking up objects from the transfer turntable of the processing station and releasing them to an inspection station;
Figure 7 shows a single pick-up/release element of Figures 5 and 6 isolated from the handling apparatus;
Figure 8 is an enlarged perspective view of a portion of the handling apparatus of Figure 1, without some parts to illustrate an area in which the handling apparatus reaches supply means of the inspection station;
Figure 9 is an enlarged perspective view of a detail of Figure 2 illustrating a defect reduction device;
Figure 10 is a schematic plan view of a second example of the handling apparatus, not according to the present invention;
Figure 11 and Figure 12 are schematic views respectively a plan view and an elevational view of a third embodiment of the handling apparatus.

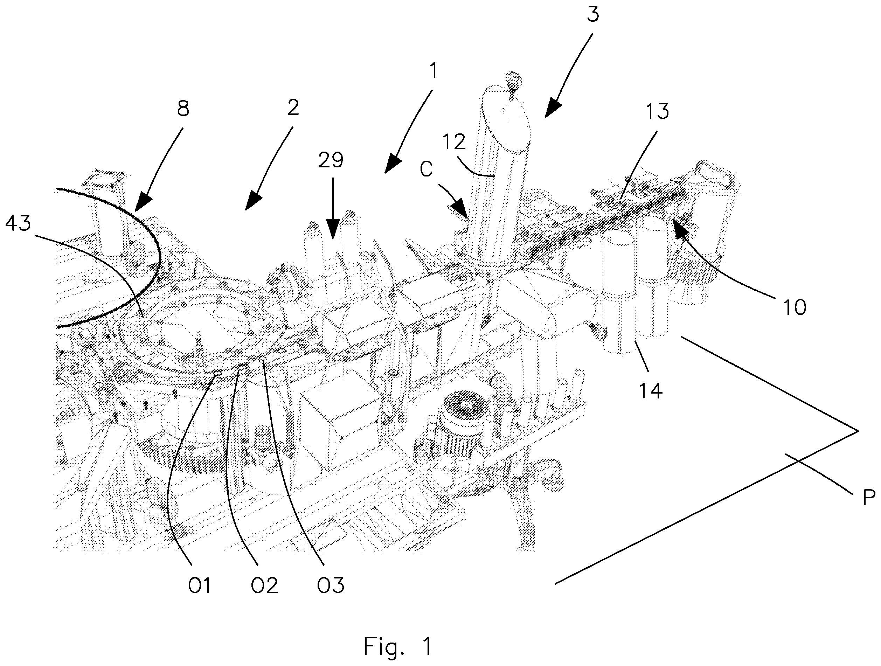

With reference to Figure 1, a first embodiment of a handling apparatus for handling objects, O1, O2, O3, etc., in a line for the production of the objects, is indicated with 1.

The objects O1, O2, O3, etc. can be closure elements for containers, for example caps, capsules for bottles, vessel lids, and so on, i.e. objects provided with a body having an open cavity extending along an axis.

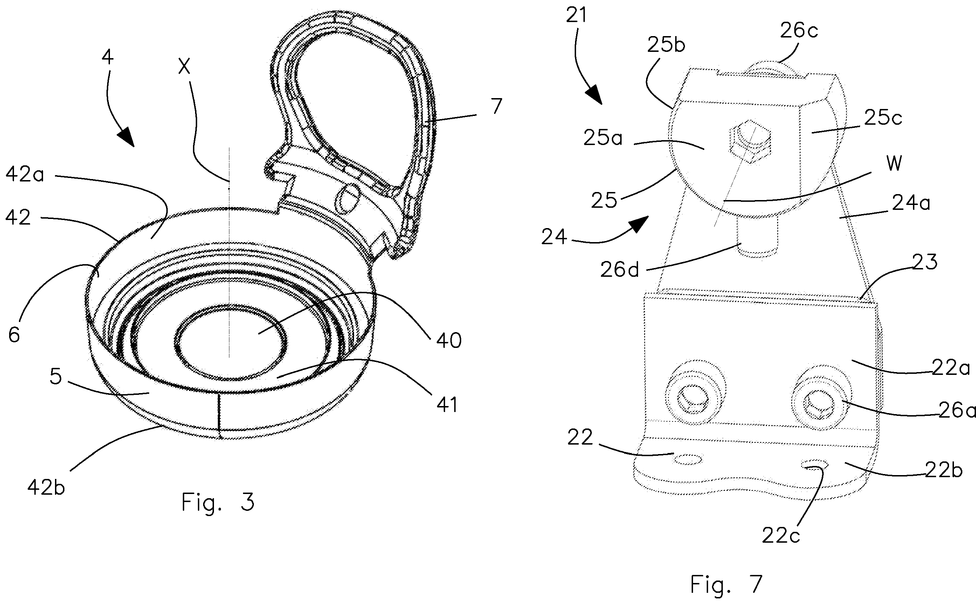

In particular, the closure elements comprise a cap of the "ring pull cap" type, i.e. a ring pull cap 4, as that shown in Figure 3. The ring pull cap 4 has a body 5, for example made of metal alloy or aluminium, in which an open cavity 6 extending along an axis X is defined. The open cavity 6 is delimited by a lateral wall 42. Connected in a known manner to the body 5 is a ring 7, for example made of polymeric material, which can be gripped by a user to be pulled and thus be able to detach the cap from a bottle, on which the cap is applied, simply without the use of any tool. The ring 7 is a portion of the cap external to the open cavity 6 and emerging from a periphery of the body 5, i.e. from the lateral wall 42, and it is connected to the lateral wall 42 in a known manner.

Generally present on a bottom wall 40 inside the open cavity 6 is a gasket 41 made of polymeric material, which acts as a seal between the body 5 and the mouth of the bottle.

In a line for the production of the objects O1, O2, O3, etc., the handling apparatus 1 can be connected downstream of a processing station 2, arranged to perform a processing operation on the objects O1, O2, O3, etc.

The processing station 2 can comprise a forming turntable 8, not shown for the sake of simplicity, but only schematically outlined with a thicker line in Figure 1, in particular a compression moulding turntable, to form at least one portion of the objects O1, O2, O3, etc., such as a plastic portion. In the embodiment in which the objects O1, O2, O3 are ring pull caps 4, the forming turntable 8 forms the ring 7 directly on the body 5, already in the form of a cap. The caps on which the ring 7 was formed exit from the processing station 2 by means of a transfer turntable 43 positioned downstream of the forming turntable 8.

Hereinafter, reference will be made without distinction to the objects O1, O2, O3, etc. or to the ring pull caps 4, since the described solutions are in any case applicable to the objects O1, O2, O3, etc. as defined above or to the ring pull caps 4.

The transfer turntable 43 comprises a disc which can rotate around a rotation axis, driven by a motor thereof, not illustrated, perpendicular to a support plane P on which the handling apparatus 1 rests, in use; the disc is provided with a plurality of seats 9, in the form of radial recesses, arranged on the peripheral surface of the transfer turntable 43. Each seat 9 is arranged to receive a body 5. The transfer turntable 43 is provided with a containment guide, for example arch-shaped, not shown, which surrounds part of the transfer turntable 43 and allows to limit the risk of the objects falling during transportation.

Provided for downstream of the processing station 2 and connected to the handling apparatus 2 is an inspection station 3 for inspecting the objects O1, O2, O3, etc. thereof and detecting any defects present on each of them.

The inspection station 3 comprises an inspection device 12 of the known type, capable of identifying the defects present on the objects, for example colour variations or wrong colours, size defects, presence of flaws, etc.

The inspection station 3 also comprises a supply conveyor belt 10 suitable for supplying the inspection device 12, i.e. conveying the objects O1, O2, O3, etc. in the inspection station 3.

Alternatively, as better described hereinafter, the inspection station may be part of the handling apparatus and be supplied directly by a conveying member of the handling apparatus.

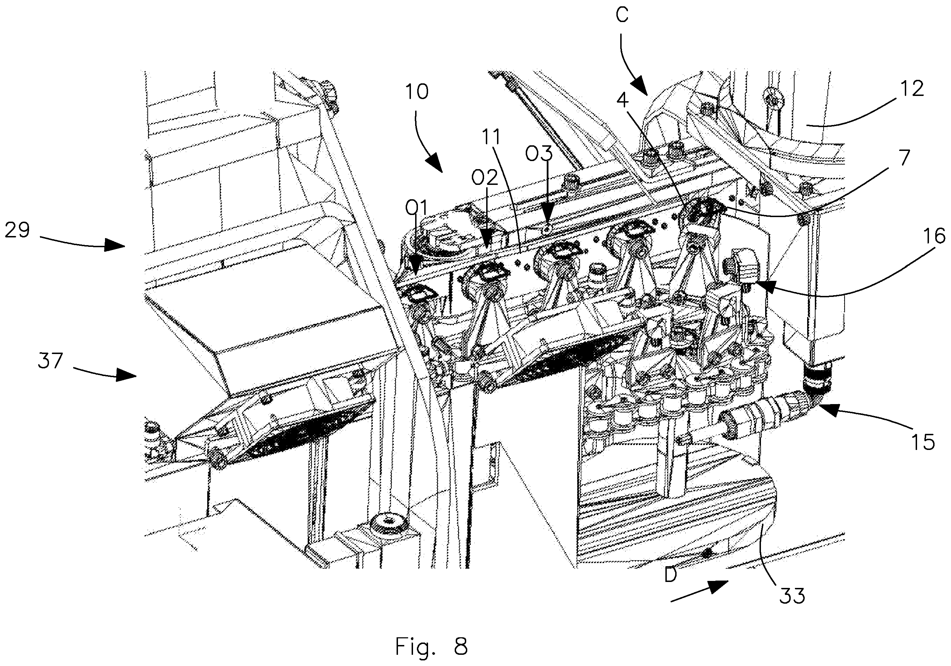

With reference to Figure 8, the supply conveyor belt 10 comprises a perforated belt 11, substantially perpendicular to the support plane P, connected to a suctioning device (not shown) and defining a suction plane, to which the objects O1, O2, O3, etc., which are transferred there onto, adhere. The supply conveyor belt 10 supplies the objects to an inspection zone C in which is present the inspection device 12 which analyses on a ring pull cap 4 at a time, the defects present, for example colour variations or wrong colours, size defects, presence of burrs, etc.

The inspection device 12 comprises, for example, a high-resolution linear scan camera, a lighting source, a processor provided with a graphic accelerator and installed inside which is a dedicated inspection software.

Should the inspection device 12 identify a faulty object among the objects O1, O2, O3, etc., then this object is ejected and moved away from the supply conveyor belt 10 by means of a blow of air. As a matter of fact, downstream of the inspection device 12, the supply conveyor belt 10 is provided with one or more ejection elements 13, shown in Figure 1. The ejection elements 13 comprise one or more nozzles arranged in fluid communication with a compressed air supply and driven to blow air onto the object placed on the supply conveyor belt 10 which has been determined to be faulty by the inspection software; the pressurised air flowing out from the one or more nozzles pushes the faulty object away from the perforated belt 11 toward ejection ducts 14, arranged at the side of the supply conveyor belt 10, each frontally with respect to the respective nozzle.

The supply conveyor belt 10 is movable at a speed that is independent from that of the transfer turntable 43, i.e. the supply conveyor belt 10 can be driven by another motor, not shown and distinct from the motor connected to the transfer turntable 43, with a speed controlled and independent from the speed at which the transfer turntable 43 rotates.

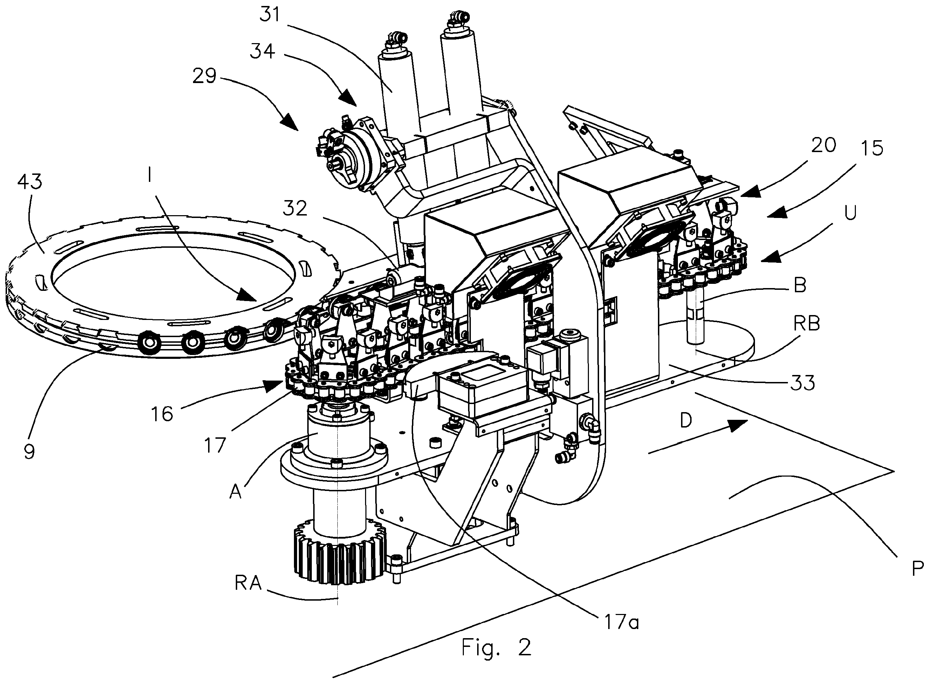

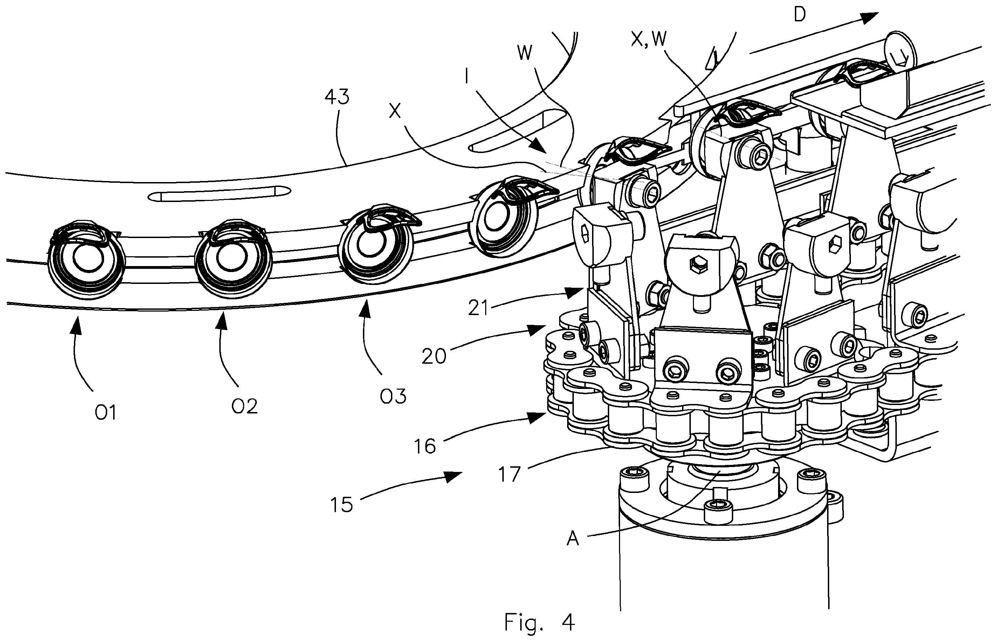

With reference to Figure 2 and to Figure 4, the handling apparatus 1 comprises a conveying assembly including a conveyor 15 arranged to convey the objects O1, O2, O3, etc., along a main direction D.

The conveyor 15 comprises a movable loop-closed transmission member or conveying member 16, for example a chain 17, which rests on the support plane P, being suitable to be mounted on a support framework 33. A straight beam of the loop of the conveying member 16 thus defines the main direction D toward the inspection station 3.

A motor, not shown, or a gear transmission system or the like, drives the conveying member 16 at a speed controlled by a control unit, also not shown. The speed of the conveying member 16 can be independent from the speed of the supply conveyor belt 10 and the speed of the transfer turntable 43. By means of a speed management program the control unit is capable of controlling and coordinating the speed of the transfer turntable 43, of the conveyor 15 and of the supply conveyor belt 10.

The transmission member 16 is wound around two gearwheels, an input gearwheel, placed in an input zone I of the conveyor 15, and an output gearwheel, placed in an output zone U of the conveyor 15, each mounted on a respective shaft, including a driving shaft A and a driven shaft B. The shafts A and B can rotate around a respective rotation axis RA and RB which is perpendicular to the support plane P. A tensioning element 17a can act on a portion of the conveying member 16 interposed between the two shafts A and B, in order to keep the chain 17 tensioned.

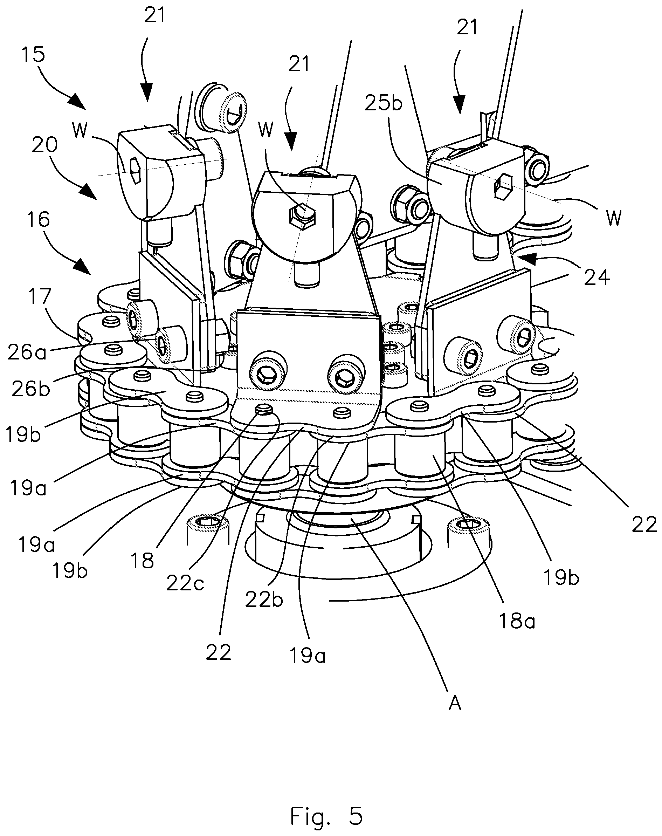

With reference to Figures 4 and 5, the conveyor 15 comprises holding means 20 conformed to hold and advance in a row one object of the objects O1, O2, O3, etc. after another along the main direction D at a predetermined mutual distance, in particular constant, keeping the axis of the open cavity of each object parallel to itself and to the support plane P on which the handling apparatus 1 rests in use.

The holding means 20 comprises a plurality of handling elements 21, also referred to in this description as pick-up/release elements 21, which are arranged at a predetermined distance from each other along the loop-like path defined by the conveying member 16, in particular they are mounted on the conveying member 16.

Each pick-up/release element 21 is shaped to interact with a single object, for example a single ring pull cap 4 and it comprises a protrusion 25 configured to be at least partially received in the open cavity 6 of the cap 4.

With reference to Figures 5 and 7, each pick-up/release element 21 comprises a stem-like portion 24 which rises from the conveying member 16, i.e. upwards in a direction substantially perpendicular to the plane P. The stem-like portion 24 comprises a support plate 24a connected to the chain 17 by means of a fixing plate 22 for example angular-shaped. In other words, the fixing plate 22 may have a substantially "L"-shaped profile, i.e. having a first part 22a perpendicular to the support plane P, and a second part 22b substantially orthogonal to the first part 22a. On the first part 22a of the fixing plate 22 and correspondingly on the support plate 24a it is provided at least one hole for the insertion of a threaded connection of the known type, such as for example a screw 26a tightened by a nut 26b (Figure 5), with which to fix the first part 22a and the support plate 24a together. An intermediate plate 23 can be interposed between the fixing plate 22 and the support plate 24a.

The support plate 24a may have an upwardly tapered shape, which resembles the shape of an isosceles triangle. From an upper end portion of the support plate 24a the protrusion 25 protrudes in the direction of an axis W substantially orthogonal to the longitudinal extension direction of the stem-like portion 24 and parallel to the support plane P; the protrusion 25 is connected to the support plate 24a by means of threaded connections of the known type, for example a screw 26c. The protrusion 25 comprises a substantially plane front surface 25a, arranged to face a surface of the body 5 of the object, such as in particular the bottom wall 40 of the open cavity 6 of the ring pull cap 4, internally of the open cavity 6. The aforementioned front surface 25a is substantially perpendicular to the support plane P on which the handling apparatus 1 rests when installed. When the protrusion 25 interacts with the ring pull cap 4, the axis W is substantially parallel to the axis X of the open cavity 6.

The protrusion 25 further comprises a thrust surface or contact surface 25b, which extends from the stem-like portion 24 toward the front surface 25a in the direction of the axis W, i.e. which laterally delimits the protrusion 25. The contact surface 25b is arranged to interact with an internal side surface 42a of the lateral wall 42 of the open cavity 6 therein to push the ring pull cap 4 along the main direction D. The contact surface 25b is a cylindrical surface for internally contacting the open cavity 6 of the ring pull cap 4. In order to avoid damaging the bottom wall 40 and the possible gasket 41, the ring pull cap 4 does not contact the front surface 25a, when interacting with the protrusion 25, so that the bottom wall 40 remains facing the surface 25a without contacting it. The bottom wall 40 is kept at a defined distance from the front surface 25a by an abutment pin 26d which acts as a support and end-stop along the direction W of the lateral wall 42 of the ring pull cap 4. The abutment pin 26d projects from the protrusion 25 toward the fixing plate 22, for example parallel to the support plate 24a.

The protrusion 25 has a base shape substantially like a circular segment, and it is bounded frontally by the front surface 25a, laterally by the contact surface 25b and at the upper part by a top surface 25d that is substantially plane and parallel to the main direction D. Departing from the front surface 25a is a release surface i.e. an inclined face 25c which reduces the area of the front surface 25a with respect to the circular segment profile, facilitating the exit of the ring pull cap 4 from the conveyor 15 without the protrusion 25 contacting the bottom wall 40 or the gasket 41. As a matter of fact, in the output zone U of the conveyor 15, each pick-up/release element 21 rotates around the output gearwheel, thus diverging from the main direction D maintained by the cap 4. The inclined face 25c allows the protrusion 25 to accompany the ring pull cap 4 and to deliver it to the supply conveyor belt 10 of the inspection station 3, maintaining a contact with the abutment pin 26d but without the edge of the protrusion 25 interacting with the bottom wall 40.

The inclined face 25c is therefore provided on one side of the protrusion 25 which is receded with respect to that of the contact surface 25b considering the main advancement direction D of the objects.

The shape of the protrusion 25 is such as to be received in the open cavity 6 of the object, for example of the ring pull cap 4. Obviously, the protrusion 25 can have any shape that is suitable to receive a single object O1, O2, O3, etc. to be conveyed having a shape different from the ring pull cap 4. In any case, the handling apparatus 1 keeps the axis of the open cavity of the object parallel to itself during the handling and substantially parallel to the support plane P.

Still, with reference to Figure 5, the stem-like portion 24 is connected to the transmission member 16 by means of the second part 22b of the fixing plate 22 provided on which is at least one opening, for example two fixing openings 22c, dimensioned to receive a respective pin 18 of the chain 17 in shape coupling. In other words, the chain 17 is of the roller type 18a with angle attachments, wherein the fixing plate 22 is an angle attachment. Thus, the chain 17 provides for two types of links which alternate therein, an inner link, in which the pins 18 are connected to each other by two inner plates 19a, and an outer link, in which two outer plates 19b mutually connect two inner links, held together by the same pins 18 passing through the inner links, each inner plate 19a being connected to an adjacent inner plate 19a by means of an outer plate 19b. The fixing plate 22 is fixed to the pins 18 so as to alternatively act as an outer plate and as an inner plate.

Naturally, the type of chain and the distance between the fixing plates 22 may differ from what is illustrated and described above, depending on the type and size of the object that is handled by the handling apparatus 1.

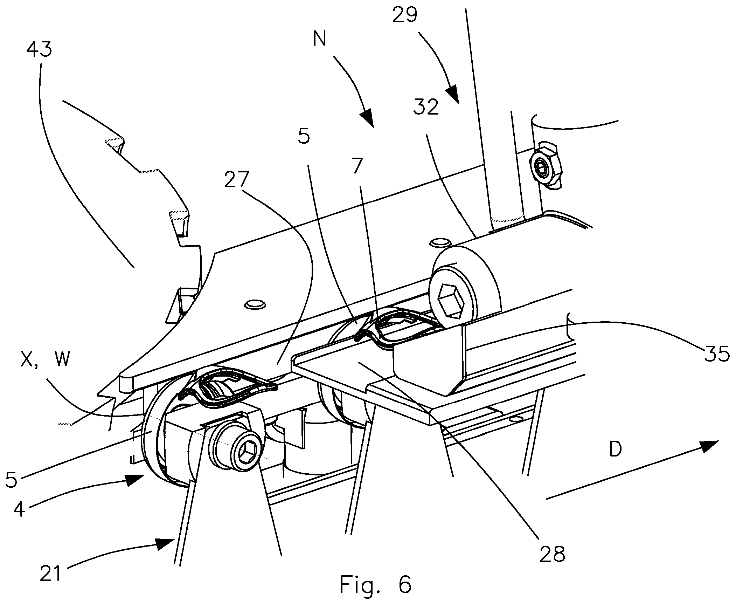

With reference to Figure 6, as mentioned above, the protrusion 25 of the pick-up/release element 21 is arranged to pick up, hold and release an object O1, O2, O3, etc., in particular the body 5 of the ring pull cap 4. In order to assist each pick-up/release element 21 in conveying each object, the conveyor 15 comprises an edge 27 arranged to limit displacements of the objects along respective axes X when conveyed by conveyor 15. The edge 27 extends parallel to the main direction D and it is placed frontally with respect to the protrusions 25 in a straight beam N of the conveying member 16 at a distance therefrom which allows the objects O1, O2, O3, etc., to pass through without interfering with the edge 27. Thus, the edge 27 defines a sliding surface for the body 5, being suitable to come into contact with an outer surface of the body 5 opposite to surfaces of the body 5 which, instead, come into contact with the protrusion 25 in use.

The conveyor 15 can also be provided with an auxiliary edge 28, arranged to support, during the conveying of the object O1, O2, O3, etc., the portion of the latter external to the open cavity thereof and emerging from the periphery of the body of the object O1, O2, O3, etc. Just like the edge 27, the auxiliary edge 28 also extends parallel to the main direction D along a straight beam of the conveying member 16.

In the case of ring pull caps 4, the auxiliary edge 28 defines a sliding surface for the ring 7 of the cap 4, the cap being conveyed with the axis X thereof kept parallel to the support plane P of the handling apparatus 1 and thus to itself.

The edge 27 and the auxiliary edge 28 can be arranged along the same beam of the conveyor 15.

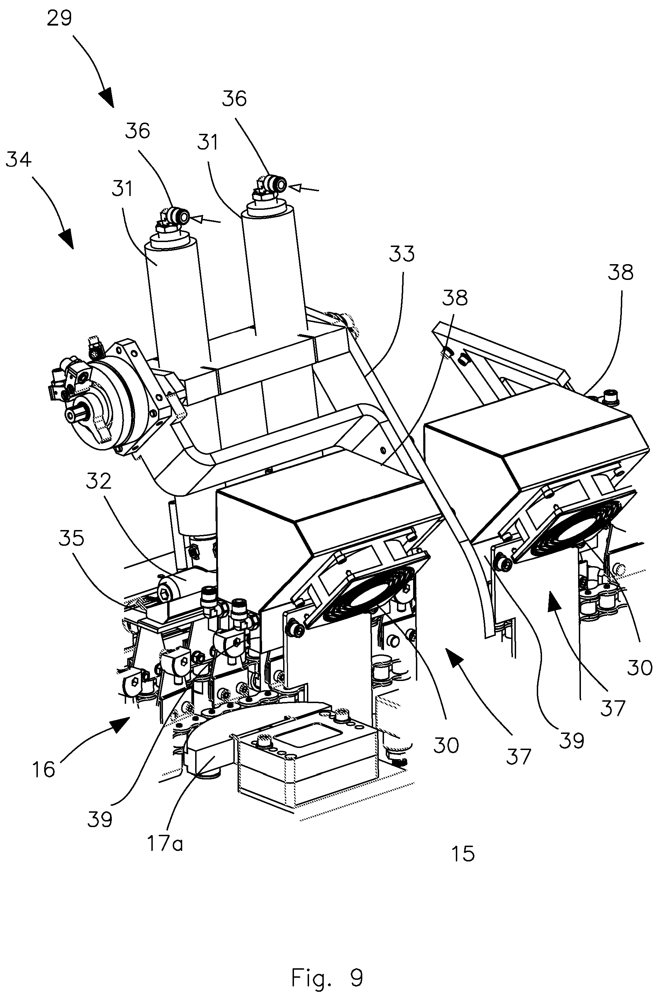

With reference to Figure 9, the handling apparatus 1 comprises a finishing unit 29 in which a finishing operation of the objects O1, O2, O3, etc., is performed, after the processing operation carried out in the processing station 2, in order to reduce shape defects of the objects. The finishing unit 29 is crossed by the conveying member 16 so that the objects, in particular the ring pull caps 4, are subjected to a finishing operation, and therefore to a defect reduction operation, when they are spaced from each other. The edge 27 and the auxiliary edge 28 can be arranged along a finishing zone inside the finishing unit 29, so as to limit undesired displacements of the objects during the finishing operations carried out thereon. The finishing unit 29 can therefore be considered as a defect reduction device suitable to perform a processing operation for reducing the defects present on one or more displaced objects.

The finishing unit 29 can comprise a heat treatment unit which includes a heating device 34 of the known type, capable of impacting the objects O1, O2, O3, etc., with a hot air jet. The heating device 34 occupies a zone of the conveying member 16 which defines a finishing zone and it comprises at least one heating element 31, for example two heating elements 31, each comprising a cylindrical chamber containing a heating filament, which, due to the Joule effect, heats the air surrounding the filament inside the cylindrical chamber. The air, coming from a compressed air system, is introduced into the cylindrical chamber of the heating elements 31 by means of a respective inlet connector 36. Each cylindrical chamber opens into a diffuser 32 which extends along the entire finishing zone and it is provided with a plurality of outlet holes for distributing the heated air into the finishing zone. A diverter element 35 faces the outlet holes of the diffuser 32 to direct the flow of heated air toward the objects O1, O2, O3, etc., present on and displaced by the conveying member 16.

On the ring 7 of the ring pull cap 4, the ring being made of thermoplastic polymeric material and formed by moulding, for example by compression, there may be present forming burrs, i.e. thin portions of polymeric material in relief on the ring 7, formed by molten plastic which, by occupying orifices present among the moulds, due to inevitable clearances and dimensional tolerances present among them, solidified subsequently forming thin relief surfaces. The burrs define shape defects of the ring 7.

The finishing unit 29 helps reduce these defects. As a matter of fact, in the finishing unit 29 the heating device 34 can impact the rings 7 with hot air with a temperature for example up to 300°C. Owing to the temperature of the hot air, any burrs present on the ring 7 are brought to a softening point and, thus, they are incorporated in the ring 7, hence eliminating the defect. In other words, the burrs collapse on the ring 7. This greatly reduces the number of objects that could be discarded in the inspection station 3 due to shape or dimensional defects.

Owing to the finishing unit 29, it is possible to make the ring pull cap 4 safer, by eliminating thin potentially sharp reliefs, aesthetically more pleasant and more uniform limiting the cause of unpleasant sensation to the touch.

As already indicated above, the burr reduction action performed by the finishing unit 29 can be applied to objects other than the ring pull cap 7, which have the same type of defect, which are conveyed by the handling apparatus 1.

The handling apparatus 1 may comprise at least one cooling device 37 for cooling the conveying member 16, being arranged along a beam of the conveying member 16 distinct from the one that the heat treatment unit faces.

The cooling device 37 comprises a fan 30 suitable to draw air from the outside and introduce it into a ventilation channel 38 which surmounts a heat exchanger 39, for example traversed by a coolant fluid, arranged above the beam of the conveying member 16 which is intended to be cooled.

In order to further reduce the temperature of the conveying member 16, several cooling devices 37may be provided e, for example two like in Figure 9, arranged one after the other along the main direction D.

Owing to the cooling devices 37 provided in the handling apparatus 1 the deformations of the chain can be inhibited, for example extensions or variations of undesired shape related to the temperature gradient, thus ensuring correct conveying of the objects.

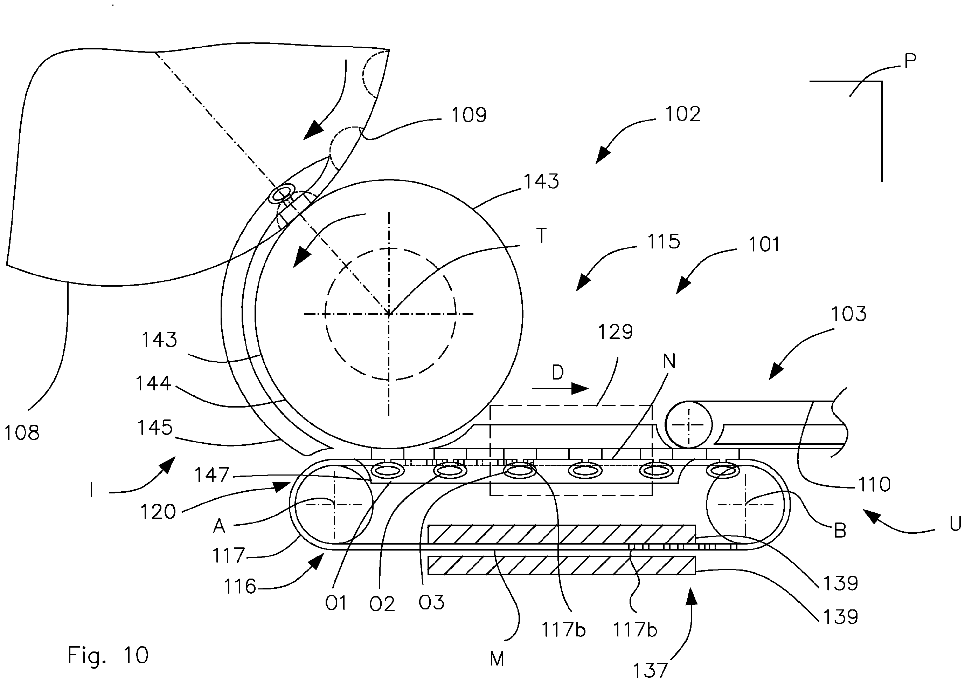

Upstream of the finishing unit 29 and downstream of the forming turntable 8, instead of the transfer turntable 43, the processing station 2 can comprise a rotatable transfer disc for transferring the objects from the forming turntable 8 toward the finishing unit 29. In other words, the rotatable transfer disc is connected to the input zone I of the conveyor 15. An example of a rotatable transfer disc is for example shown in Figure 10 and will be described in detail hereinafter.

The conveyor 15 may also comprise at least one sensor - for example a photocell or other position sensor (not shown) - arranged along the path of the objects on the transmission member 16. The sensor is suitable to detect the passage of each object O1, O2, O3, etc., so as to determine a reference position for each object and to emit a signal relating to the aforementioned position.

The signal provided by the sensor can be sent to the control unit which, in response to the signal, is configured to coordinate the advancement of the objects O1, O2, O3, etc., on the transmission member 16 with the angular advancement speed of the seats 9 of the transfer turntable 43, and with the advancement speed of the supply conveyor belt 10.

Based on the relationship between the distance of the objects O1, O2, O3, etc., on the transmission member 16 and the distance of the objects in the seats 9 of the transfer turntable 43 arranged upstream of the transmission member 16, the control unit is configured to coordinate the corresponding relationship between the speeds of the conveying member 16 and of the transfer turntable 43, so as to ensure synchronism during the picking up of each object by the pick-up/release elements 21. In other words the control unit is configured to control the speed of the conveying member 16 of the conveyor 15, in particular in response to the signal received from the sensor, so that the pick-up/release elements 21 can pick up one object at a time from the transfer turntable 43, in coordination with the arrival of a seat 9 of the aforementioned transfer turntable 43.

Similarly, the control unit is configured to coordinate the speed of the transmission member 16 with that of the supply conveyor belt 10 so that the pick-up/release elements 21 are capable of releasing one object at a time on the supply conveyor belt 10 keeping them at the desired mutual distance.

A counting device not illustrated provided in the handling apparatus 1 to count the number of objects passing in a defined zone of the handling apparatus 1, can also be connected to the control unit. Counting devices can also be provided in the processing station 2, in particular in the transfer turntable 43, and/or in the inspection station 3.

Therefore owing to the counting device/s and coordinating the speeds of the supply conveyor belt 10, of the transmission member 16 and of the transfer turntable 43, the control unit is capable of associating any object O1, O2, O3, etc., to the corresponding pick-up/release element 21 of the transmission member 16, or to the seat 9 of the transfer turntable 43. In this manner, if an i-th faulty object is discarded in the inspection station 3, there can be carried out a "feedback" control on the origin of the defect, tracing back in this way to the cause that generated that defect, for example a scratch, or a deformation or defects of another nature in one of the seats of the forming turntable 8 arranged upstream of the transfer turntable 43, or on a pick-up/release element 21, or even a malfunction in the analysis of the defects of the inspection device 12.

In the embodiment shown in Figures 1 to 9, the conveyor 15 acts as a connection between the processing station 2 and the inspection station 3 through the finishing unit 29.

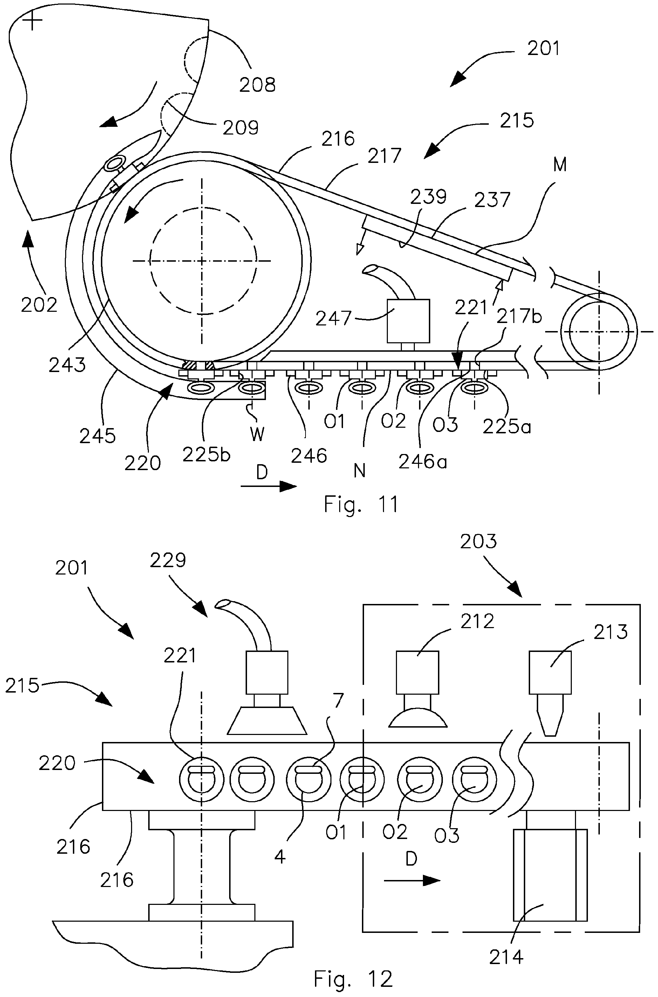

In one embodiment, the conveyor 15 is conformed to supply the inspection station 3 which is thus included in the handling apparatus. In other words, in this embodiment the conveying member 16 passes through the inspection station 3. An example of this embodiment is shown in Figures 11 and 12 and it will be better described hereinafter.

In one embodiment, besides the conveyor 15, a rotatable transfer disc which, together with the conveyor 15, defines a conveying assembly, can be provided in the handling apparatus, upstream of the conveyor 15.

In this embodiment of the handling apparatus, the conveyor 15 is conformed to comprise the rotatable transfer disc, i.e. the conveying member 16 is at least partially wound around the rotatable transfer disc. An example of this embodiment is shown in Figures 11 and 12 and it will be better described hereinafter.

The elements of the handling apparatus 1 described so far, and the advantages deriving therefrom, if not expressly excluded or incompatible, can be considered included in and applicable to all the embodiments that will be described hereinafter, even if not explicitly mentioned.

Referring now to Figure 10, a handling apparatus 101 according to a second example, not according to the present invention, which can be connected upstream to a processing station 102 for rocessing a group of objects O1, O2, O3, etc., and downstream to an inspection station 103, the stations being shown only partly and schematically, is indicated with 101. The objects O1, O2, O3, etc., are the same as those which can be conveyed by the handling apparatus 1, i.e. objects provided with a body having an open cavity extending along an axis, in particular ring pull caps 4.

In the description of this second example, reference numbers increased by one hundred will be used to indicate elements equal or similar in terms of structure or function to those described with reference to the previous embodiments according to Figures 1 to 9. For details, reference may be made to the description already outlined regarding these elements, where not repeated herein.

For example, the processing station 102 and the inspection station 103 are functionally and structurally the same as the processing station 2 and the inspection station 3 described with reference to the embodiment shown in Figures 1 to 9 unless the processing station 102 comprises, instead of the transfer turntable 43, a rotatable transfer disc 143 arranged at the exit of a forming turntable 108. Naturally, instead of the rotatable transfer disc 143 a transfer turntable 43, like the one shown in Figures 1 and 2, i.e. provided with seats 9 as shown in Figure 2. can be alternatively provided at the outlet of the forming turntable 108, each seat being designed to accommodate an object.

Only a part of a forming turntable 108 is shown in the processing station 102, just like a supply conveyor belt 110 is shown only partially as concerns the inspection station 103.

The handling apparatus 101 comprises a conveying assembly including a conveyor 115 arranged to convey the objects O1, O2, O3, etc., from the processing station 102 to the inspection station 103, along a main direction D. The conveyor 115 comprises a movable and loop-closed transmission member or conveying member 116, mounted for example on a support framework, not shown, resting on a support plane P, parallel to the view plane of Figure 10. The conveying member 116 comprises a belt 117 wound between two pulleys, an input pulley, arranged in an input zone I of the conveyor 115, and an output pulley, arranged in an output zone U of the conveyor 115, each pulley being mounted on a respective shaft A and B which is perpendicular to the support plane P.

The belt 117 is permeable to air, i.e. it is provided with a plurality of holes 117b, schematically illustrated only on some zones of the belt 117, although they are distributed over the whole extension of the belt 117. The belt 117 is for example metallic.

The conveyor 115 comprises holding means 120 conformed to hold and advance in a row one object of the objects O1, O2, O3, etc. after another along the main direction D at a predetermined mutual distance, in particular constant, keeping the axis of the open cavity of each object parallel to itself and to the support plane P on which the handling apparatus 101 rests in use.

The holding means 120 comprise suction means 147 connected to the plurality of holes 117b and arranged to hold by depression the objects on the belt 117 so that the latter defines an adhesion surface for each body of the objects O1, O2, O3, etc. conveyed. The suction means 147 comprise a suction chamber arranged along a straight beam of the belt 117 and they are configured to apply a depression which, through the plurality of holes 117b, allows each object O1, O2, O3, etc. to adhere and remain stationary with respect to the adhesion surface, so that the objects remain spaced apart from each other during the conveying.

The adhesion surface for the objects O1, O2, O3, etc. is therefore substantially perpendicular to the support plane P on which the handling apparatus 101 rests, once installed, and substantially parallel to the main direction D.

Furthermore, the handling apparatus 101 comprises a finishing unit 129 in which an operation for the finishing of the objects O1, O2, O3, etc. is performed, after the processing operation carried out in the processing station 102, in order to reduce shape defects of the objects. The finishing unit 129 is crossed by the conveying member 116 so that the objects, in particular the ring pull caps 4, are subjected to a finishing operation, and therefore to a defect reduction operation, when they are spaced from each other. The structure and function of the finishing unit 129 may be the same as that of the finishing unit 29 described above and reference is made thereto for details.

Owing to the finishing unit 129, it is possible to make the ring pull cap 4 safer, more pleasant to the touch and also aesthetically more uniform, eliminating the undesired thin projections resulting from the forming of the ring 7.

Upstream of the conveyor 115, the processing station 102 includes the rotatable transfer disc 143.

The rotatable transfer disc 143 receives the objects O1, O2, O3, etc. from the forming turntable 108 and transfers them to the conveyor 115 toward the finishing unit 129.

The rotatable transfer disc 143 is suitable to pick up one object at a time in coordination with the arrival of a seat 109 of the processing station 102 and release the object in coordination with the arrival of the conveyor 115.

The rotatable transfer disc 143, which can be rotated around its own axis T, comprises a peripheral conveying surface 144 against which the objects O1, O2, O3, etc. come into contact and by means of which they are driven by friction. In other words, the objects are conveyed from the peripheral conveying surface 144.

A containment guide 145 is provided with the aim of assisting the rotatable transfer disc 143 to convey each object without the risk of accidental falling thereof. The containment guide 145 is shaped like a circumference arc and it is arranged so as to surround at least one circumferential arc portion of the rotatable transfer disc 143.

The peripheral conveying surface 144 may be provided with a plurality of openings not shown, which connect the rotatable transfer disc 143 to pneumatic suction means also not shown, in order to hold the objects spaced apart from each other on the peripheral conveying surface 143 with a greater force with respect to the friction force alone.

The rotatable transfer disc 143 is connected to a motor, either directly or by means of a motion transmission system for example a gear system, which drives the rotatable transfer disc 143 in rotation at a controlled speed and independent from the speed of the conveying member 116, which can also be driven by its own motor, directly or by means of a motion transmission system for example by means of a gear system. A control unit, not shown, is configured to control the two motors or the corresponding transmission systems according to a predetermined speed management program, in particular to control the speeds of the conveying member 116 and the rotatable transfer disc 143 independently from each other.

By means of the speed management program, the control unit is capable of mutually controlling and coordinating the speed of the forming turntable 108, of the rotatable transfer disc 143, of the conveying member 116 and also of the supply conveyor belt 110.

In detail, the control unit is configured to coordinate the speeds of the rotatable transfer disc 143 and the forming turntable 108, so as to ensure the synchronism during the picking up of each object. In other words, in use, the control unit is configured to control the speed of the rotatable transfer disc 143 so that the aforementioned rotatable transfer disc 143 picks one object at a time from the forming turntable 108, in particular, in coordination with the arrival of a seat 109 of the aforementioned forming turntable 108. The control unit is also configured to control the speed of the conveying member 116 so that one object is delivered at a time to the supply conveyor belt 110 of the inspection station 103, thus ensuring that the objects maintain a certain mutual distance along the entire path from the forming turntable 108 to the inspection station 103.

The finishing unit or defect reduction device 129 extends along a straight beam N of the conveying member 116 and, as indicated above, it may comprise a heat treatment unit just like the finishing unit 29, whose description can be referred to for details.

Furthermore, the handling apparatus 101 comprises at least one cooling device 137 suitable to cool the conveying member 116, being arranged along a beam M of the conveying member 116 distinct from the straight beam N on which is faced the heat treatment unit.

Alternatively, to the structure described regarding the cooling device 37, the cooling device 137 can comprise two cooling plates 139 arranged facing the beam M of the conveying member 116 respectively inside and outside the loop of the conveying member 116.

Owing to the cooling device 137, the deformations of the belt 117, for example extensions or undesired shape variations related to the temperature gradient, can be eliminated and a correct conveying of the objects is hence ensured.

In order to further reduce the temperature of the conveying member 116, several cooling devices 137 may be provided , arranged one after the other along the main direction D.

With reference to Figures 11 and 12, indicated with 201 is a handling apparatus according to a third embodiment, which can be connected to an apparatus for processing objects O1, O2, O3, etc., the latter potentially being the same objects that can be handled by the handling apparatuses of the previously described embodiments, i.e., objects provided with a body defined in which is an open cavity extending along an axis X, in particular ring pull caps 4.

As concerns this embodiment 201, reference numbers increased by two hundred will be used to indicate elements equal or similar in terms of structure or function to those described with reference to the previous embodiments according to Figures 1 to 9. For details, reference may be made to the description already outlined regarding these elements, where not repeated herein.

The handling apparatus 201 can be positioned downstream of a processing station 202, provided in which is a rotatable forming turntable 208, which is identical to the one described in the previous embodiments both from the structural and operating point of view.

The handling apparatus 201 comprises a conveying assembly 215 for conveying the objects from the processing station 202 toward an inspection device 212 along a main direction D. The conveying assembly 215 includes a movable, loop-closed conveying member 216, in particular a belt 217, and holding means 220 conformed to hold and advance one object of the objects O1, O2, O3, ... after the other in a row at a predetermined mutual distance, in particular constant, by keeping the axis X of each open cavity of the object substantially parallel to itself and to a support plane P on which the handling apparatus 201 rests in use.

The holding means 220 comprises a plurality of handling elements or pick-up/release elements 221 mounted on the conveying member 216 at a predetermined distance from each other along the loop defined by the conveying member 216.

For the sake of simplicity of representation, only a few pick-up/release elements 221 are shown in Figures 11 and 12, although they are distributed over the entire extension of the conveying member 216.

Each pick-up/release element 221 is conformed to interact with a single object 4 and it comprises a hollow housing 246 configured to at least partially surround an outer side surface 42b of the lateral wall 42 of the body 5, i.e. arranged outside the open cavity 6 of the object.

Thus the hollow housing 246 comprises a hollow body connected to, and projecting from the conveying member 216 externally of the loop of the belt 217.

A substantially plane front surface 225a is arranged in the hollow housing 246 to face the bottom wall 40 of the open cavity 6 of the object externally of the open cavity 6. The front surface 225a which faces and externally abuts the objects O1, O2, O3, etc, is therefore substantially perpendicular to the support plane P on which the handling apparatus 201 rests, once installed, and substantially parallel to the main direction D.

The hollow housing 246 further comprises a thrust surface or contact surface 225b extending in a direction of an axis W of a hollow of the hollow housing 246 and which laterally delimits such hollow.

The contact surface 225b is arranged to interact with the outer side surface 42b of the lateral wall 42 of the open cavity 6, i.e. externally of the open cavity 6, for pushing the object 4 along the main direction D. The contact surface 225b is for example a cylindrical surface for externally contacting the open cavity 6 of the ring pull cap 4. When the hollow housing 246 interacts with the ring pull cap 4, the axis W of the hollow is substantially parallel to the axis X of the open cavity 6.

The belt 217 is permeable to air, i.e. it is provided with a plurality of suction holes 217b, schematically illustrated only on a straight beam of the belt 217, although they are distributed over the whole extension of the belt 217. The belt 217 may be a metallic belt.

Defined in each hollow housing 246, for example at the front surface 225a, is at least one opening 246a arranged in fluid communication with one or more suction holes 217b.

Suction means 247, including for example a vacuum pump and relative air circuit, are connected to the plurality of suction holes 217b for holding by depression the object in the respective hollow of housing hollows 246 through the openings 246a and the suction holes 217b.

In this manner, each object remains in the hollow housing thereof and suitably spaced apart from each other during the conveying.

Furthermore the handling apparatus 201 comprises a finishing unit 229 in which a finishing operation on the objects O1, O2, O3, etc., is performed, after the processing operation carried out in the processing station 202, in order to reduce shape defects of the objects, similarly to the description outlined with reference to the previous embodiments and to which reference shall be made. The finishing unit 229 is crossed by the conveying member 216.

In particular the suction means 247 are provided at least at a finishing zone of the conveying member 216 in which the finishing unit 229 is mounted.

Upstream of the finishing unit 229 and downstream of the processing station 202, the conveying assembly 215 comprises a rotatable transfer disc 243, which can therefore rotate around its own axis, to transfer the objects from the processing station 202 toward the finishing unit 229. The conveying member 216, provided with the plurality of hollow housings 246 is at least partially wound around the rotatable transfer disc 243 with the hollow housings 246 facing toward the external. The rotatable transfer disc 243 comprises a drum that can be perforated and connected to further suction means to maintain a certain degree of depression in the hollow housings 246 also in this zone of the conveying assembly 215. The conveying assembly 215 further comprises a containment guide 245, with the aim of assisting the rotatable transfer disc 243 to convey each object without the risk of accidental falling thereof. The containment guide 245 is shaped like a circumference arc and it is arranged facing the rotatable transfer disc 243 so as to surround at least one circumferential arc portion of the rotatable transfer disc 243, as illustrated in Figure 11. Supporting a portion of the object outside the open cavity and emerging from the periphery of the body of the object, the containment guide 245 also acts as a sliding guide for the rings 7 of the ring pull caps 4 in the area of the conveying assembly 243 in which the rotatable transfer disc 243 is present.

With respect to the previously described embodiments, the handling apparatus 201 comprises the rotatable transfer disc 243 and also the inspection station 203, i.e. the conveying member 216 supplies and crosses the inspection device 212.

Downstream of the inspection device 212 there are arranged one or more ejection elements 213, identical to those described previously, suitable for ejecting the objects deemed not acceptable by the inspection device 212 toward ejection ducts 214.

The conveying member 216 is driven by a motor at a controlled speed and with a speed independent from the speed of the forming turntable 208. A control unit is configured to control the motor according to a predetermined speed management program, in particular to control the speeds of the conveying member 216 and the forming turntable 208 so that they are coordinated so as to ensure synchronism during the picking up of each object from the forming turntable 208. In other words, in use, the control unit is configured to control the speed of the conveying member 216 so that each pick-up/release element 221 picks up one object at a time from the forming turntable 208, in coordination with the arrival of a seat 209 of the aforementioned forming turntable 208.

The finishing unit, or defect reducing device 229 extends along a straight beam of the conveying member 216 and, as in the other embodiments, it may comprise a heat treatment unit. In this manner, in particular the ring pull caps 4 are subjected to a finishing operation when they are spaced apart from each other, this allowing the forming burrs to collapse on the ring 7, avoiding the risk of two caps sticking to each other during heat treatment due to the fact that they are too close, due to the sticky state of the softened plastic. Furthermore, eliminating a shape defect on the ring pull cap 4 it is possible to limit the number of caps discarded by the inspection device due to non-compliant shape.

Owing to the finishing unit 229, it is possible to confer to the ring pull cap 4, or a conveyed object coming from a moulding station, a more uniform appearance and free from potentially sharp surfaces, therefore safer as well as more pleasant to the touch with respect to the known ring pull caps.

Furthermore, the handling apparatus 201 comprises at least one cooling device 237 suitable to cool the conveying member 216, being arranged along a beam M of the conveying member 216 distinct from the beam N on which the heat treatment unit faces.

The cooling device 237 may comprise one or more cooling plates 239 arranged facing the beam M of the conveying member 216.

Owing to the cooling device 237 the deformations of the belt 217, for example extensions or undesired shape variations related to the temperature gradient, can be eliminated and a correct conveying of the objects is hence ensured.

In all the embodiments described above, in use, the handling apparatus 1, 101, 201 conveys the objects O1, O2, O3, ... from the processing station 2, 102, 202 to the inspection station 3, 103, 203, picking up from the processing station 2, 102, 202 one object at a time and holding and advancing in a row the object one after the other along the main direction D on a movable, loop-closed conveying member 16, 116, 216, keeping the objects at a predetermined mutual distance, in particular constant.

Being provided with an open cavity extending along a respective axis X, the objects O1, O2, O3, etc. are conveyed by keeping the respective axes X substantially horizontal and parallel to themselves.

During the conveying in a row of the objects O1, O2, O3, etc., it is provided to perform a finishing operation on the objects O1, O2, O3, ... in order to eliminate defects which the objects have subsequently to the processing operation received in the processing station 2.

The speed of the conveying member 16, 116, 216 is controlled so that the objects are received in phase coordination with the arrival of a seat 9, 109, 209 of the processing station 2, 102, 202 from which the object comes, the processing station 2, 102, 202 having a plurality of seats 9, 109, 209 arranged angularly spaced apart from each other to accommodate an object each.

In order to hold the objects O1, O2, O3, etc., it is provided to introduce a protrusion 25 into the open cavity of the object or to surround the body of the object with a hollow housing 246.

Holding the objects O1, O2, O3, etc. comprises holding by suction by means of the conveying member 16, 116, 216 which is provided with a plurality of suction holes 117b, 217b and connected to suction means which create a depression.

When the objects O1, O2, O3, etc. comprise ring pull caps 4 in which the pull ring 7 is made of plastic, the processing operation carried out in the processing station 2, 102, 202 is a forming step of the pull ring 7 by means of moulding, for example by compression, and the finishing operation comprises heating the pull ring 7 after the moulding so that the possible burrs present on the pull ring 7 collapse thereon.

Owing to the handling apparatus, it is possible to connect the processing station and the inspection station with a relatively simple structure which does not require to excessively modify the possibly existing processing station, which generally comprises a rather complex machine.

It is also possible to keep the objects O1, O2, O3, etc. spaced apart from each other so as to make inspection by the inspection station effective with a reduction in the number of errors committed by the inspection station due to the reading of two or more adjacent objects.

Furthermore, it is possible to perform a feedback control on the apparatuses upstream of the inspection station, in fact, knowing which object has been deemed as defective allows to trace back to which point of the line the defect was generated, since the position of the single object can be traced on the handling apparatus, given that the objects are kept spaced apart from each other.

The finishing unit in the handling apparatus allows to keep unchanged the processing station, which must not be modified to house the finishing unit, thus allowing to obtain a reduction of defects on the objects with a relatively simple apparatus which can be connected to the known processing station. Furthermore, combining the finishing unit with the conveying member that keeps the objects one after the other in a row allows the objects to be heat treated without the risk of coming into contact with each other and thus be damaged. Naturally, the presence of the finishing unit allows to considerably reduce the number of pieces discarded due to shape defect and it allows to provide the piece, in particular a ring pull cap, a more uniform and pleasant surface to the sight and to the touch.

## Claims

1. Handling apparatus for handling objects (O1, O2, O3, ...) from a turntable (43; 143; 208) of a processing station (2; 102; 202) arranged to perform a processing operation on said objects (O1, O2, O3, ...) to an inspection station (3; 103; 203) arranged downstream of said processing station (2) for inspecting said objects (O1, O2, O3, ...), each object (4) of said objects (O1, O2, O3, ...) being provided with a body (5) in which an open cavity (6) extending along an axis (X) is defined, said handling apparatus (1; 101; 201) comprising a conveying assembly (15; 115; 215) for conveying said objects (O1, O2, O3, ...) along a main direction (D), **characterised in that** said conveying assembly (15; 115; 215) comprises a movable, loop-closed conveying member (16; 116; 216) and holding means (20; 120; 220) conformed to hold and advance in a row one object (4) of said objects (O1, O2, O3, ...) after another along said main direction (D) at a predetermined mutual distance, keeping said axis (X) substantially parallel to itself and to a support plane (P) on which said handling apparatus (1) rests in use, said handling apparatus (1; 101; 201) further comprising a finishing unit (29; 129; 229), in which a finishing operation is carried out on said objects (O1, O2, O3, ...) subsequently to said processing operation in order to reduce shape defects of said objects, said finishing unit (29; 129; 229) being crossed by said conveying member (16; 116; 216), said finishing unit (29; 129; 229) including a heat treatment unit for heat treating said objects (O1, O2, O3, ...), and providing heat to said objects, wherein said conveying assembly (15; 115; 215) is provided with an edge (27) arranged for limiting displacements of said objects along the respective axes (X) thereof as said objects are conveyed by said conveying assembly (15; 115; 215).

2. Handling apparatus (1; 101; 201) according to claim 1, wherein said holding means (20; 220) comprises a plurality of handling elements (21; 221) mounted on said conveying member (16; 216) at a predetermined distance from each other along said loop, each handling element (21; 221) of said plurality of handling elements being designed to interact with a single object (4) and comprising:
a protrusion (25) configured to be received in said open cavity (6); or
a hollow housing (246) configured to at least partially surround a lateral wall (42) of said body (5) externally of said open cavity (6).

3. Handling apparatus (1; 101; 201) according to claim 2, wherein said protrusion (25) comprises a front surface (25a) that is substantially plane and arranged to face a bottom wall (40) of said open cavity (6) internally of said open cavity (6) or said hollow housing (246) comprises a front surface (225a) that is substantially plane and arranged to face a bottom wall (40) of said open cavity (6) externally of said open cavity (6).

4. Handling apparatus (1; 101; 201) according to any one of claims 2 to 3, wherein:
said protrusion (25) comprises a contact surface (25b) that laterally delimits said protrusion (25) and that is arranged to interact with a side wall of said open cavity (6) internally of said open cavity (6) to push said object (4) along said main direction (D); or
said hollow housing (246) comprises a contact surface (225b) that laterally delimits a hollow of said hollow housing (246) and that is arranged to interact with a side wall of said open cavity (6) externally of said open cavity (6) to push said object (4) along said main direction (D).

5. Handling apparatus (1; 101; 201) according to any one of claims 2 to 4, wherein said protrusion (25) is connected to, and protruding from, a stem-like portion (24) that rises from said conveying member (16).

6. Handling apparatus (1; 101; 201) according to claim 5, wherein said conveying member (16) comprises a chain (17) drivable by a motor and said stem-like portion (24) comprises a plate (24a) tapered towards said protrusion (25) and connected to a fixing plate (22) mounted on said chain (17); or wherein said conveying member (16) comprises a chain (17) drivable by a motor and said stem-like portion (24) comprises a plate (24a) tapered towards said protrusion (25) and connected to a fixing plate (22) mounted on said chain (17) and said handling elements (21) are mounted alternately on chain links of said chain (17) so that two subsequent handling elements are mounted respectively to an inner link and to an outer link of said chain (17).

7. Handling apparatus (1; 101; 201) according to any one of claims 2 to 4, wherein said hollow housing (246) comprises a hollow body connected to, and protruding from, said conveying member (216), externally of said loop, said conveying member (216) comprising a belt (217) provided with a plurality of suction holes (217b) arranged in fluid communication with corresponding openings (246a) provided in a respective hollow housing (246) and said holding means (220) further comprising suction means connected to said suction holes (217b) for holding by means of depression said object (4) in a respective hollow housing (246).

8. Handling apparatus (1; 101; 201) according to any preceding claim, wherein said conveying assembly (15; 115; 215) is provided with an auxiliary edge (28) arranged for supporting a portion (7) of said object (4) external to said open cavity (6) and emerging from a periphery of said body (5), during the conveying of said object (4).

9. Handling apparatus (201) according to any preceding claim, wherein said conveying assembly (215) further comprises a rotatable transfer disc (243), upstream of said finishing unit (229), for receiving said objects from said processing station (202) or said conveying assembly (215) further comprises a rotatable transfer disc (243), upstream of said finishing unit (229), for receiving said objects from said processing station (202) and said conveying member (216) at least partially winds around said rotatable transfer disc (243).

10. Handling apparatus (1; 101; 201) according to any preceding claim, wherein said conveying member (16; 116; 216) extends along said finishing unit (29; 129; 229) up to an output zone (U) of said handling apparatus (1; 101; 201), said output zone (U) being connectable to a conveyor belt (10) provided in said inspection station (3; 103) that supplies said inspection station (3; 103) with said finished objects (O1, O2, O3, ...) coming from said conveying member (16; 116); or wherein said inspection station (203) is included in said handling apparatus (201), said inspection station (203) being crossed and supplied by said conveying member (216).

11. Handling apparatus (1; 101; 201) according to any preceding claim, and further comprising control means for controlling the speed of said conveying member (16; 116; 216) drivable by a motor so that said holding means (20; 120; 220) receive an object at a time in coordination with the arrival of a seat (9; 109; 209) of said turntable (43; 143; 208) of said processing station (2; 102; 202) from which said object (4) comes reaching said conveying assembly (15; 115; 215), said turntable (43; 143; 208) having a plurality of seats (9; 109; 209) arranged angularly spaced one another for housing an object (4) each.

12. Handling apparatus (1; 101; 201) according to claim 1, and further comprising a cooling device (37; 137; 237) for cooling said conveying member (16; 116; 216) and arranged along a beam (M) of said conveying member distinct from a further beam (N) on which said heat treatment unit faces.

13. Handling apparatus (1; 101; 201) according to claim 1 or 12, wherein said objects (O1, O2, O3, ...) comprise ring pull caps (4) in which said pull ring (7) is made of plastics, said processing station (2; 102; 202) comprises a compression moulding station for compressing moulding said pull ring (7) and said heat treatment unit comprises at least a heating element (31) for heating said pull ring (7) after said compression moulding so that any burrs present on said pull ring (7) collapse thereon.

14. Handling method for handling objects (O1, O2, O3, ...) downstream of a turntable (43; 143; 208) of a processing station (2; 102; 202) arranged to perform a processing operation on said objects (O1, O2, O3, ...) and upstream of an inspection step (3; 103; 203) of said objects (O1, O2, O3, ...), each object (4) of said objects (O1, O2, O3, ...) being provided with a body (5) in which an open cavity (6) extending along an axis (X) is defined, said handling method comprising conveying said objects (O1, O2, O3, ...) along a main direction (D), **characterised in that** said conveying comprises receiving said objects from said turntable (43; 143; 208), holding one object (4) of said objects (O1, O2, O3, ...) at a time on a moveable, loop-closed conveying member (16; 116; 216), driving said conveying member (16; 116; 216) for advancing in a row one object of said objects (O1, O2, O3, ...) after another along said main direction (D) at a predetermined mutual distance, keeping said axis (X) substantially horizontal and parallel to itself, and further comprises carrying out a finishing operation on said objects (O1, O2, O3, ...) for reducing shape defects of said objects subsequently to said processing operation, said finishing operation occurring during said advancing in a row, wherein there is provided limiting displacements of said objects along the respective axes (X) thereof as said objects are conveyed.

15. Handling method according to claim 14, wherein said advancing in a row comprises controlling the speed of said conveying member (16; 116; 216) so that said receiving said objects occurs in phase coordination with the arrival of a seat (9; 109; 209) of said turntable (43; 143; 208) from which said object comes, said turntable (43; 143; 208) having a plurality of seats (9; 109; 209) arranged angularly spaced from each other for housing an object (4) each.

16. Handling method according to claim 14 or 15, wherein said holding comprises inserting a protrusion (25) in said open cavity (6) or surrounding said body (5) with a hollow housing (246) or holding by means of depression through said conveying member (16; 116; 216) or inserting a protrusion (25) in said open cavity (6) and holding by means of depression through said conveying member (16; 116; 216) or surrounding said body (5) with a hollow housing (246) and holding by means of depression through said conveying member (16; 116; 216).

17. Handling method according to any one of claims 14 to 16, wherein said objects (O1, O2, O3, ...) comprise ring pull caps (4) in which said pull ring (7) is made of plastics, said processing is a forming step said pull ring (7) by compression moulding and said finishing operation comprises heating said pull ring (7) after said compression moulding so that any burrs present on said pull ring (7) collapse thereon.

## Patentansprüche

1. Handhabungsvorrichtung zum Handhaben von Objekten (O1, O2, O3, ...) von einem Drehtisch (43; 143; 208) einer Verarbeitungsstation (2; 102; 202), die angeordnet ist, um einen Verarbeitungsvorgang an den Objekten (O1, O2, O3, ...) durchzuführen, zu einer Prüfstation (3; 103; 203), die stromabwärts der Verarbeitungsstation (2) angeordnet ist, zum Prüfen der Objekte (O1, O2, O3, ...), wobei jedes Objekt (4) der Objekte (O1, O2, O3, ...) mit einem Körper (5) versehen ist, in dem ein offener Hohlraum (6) definiert ist, der sich entlang einer Achse (X) erstreckt, die Handhabungsvorrichtung (1; 101; 201) umfassend eine Förderbaugruppe (15; 115; 215) zum Fördern der Objekte (O1, O2, O3, ...) entlang einer Hauptrichtung (D), **dadurch gekennzeichnet, dass** die Förderbaugruppe (15; 115; 215) ein bewegbares, schleifenförmiges Förderteil (16; 116; 216) und Haltemittel (20; 120; 220) umfasst, die angepasst sind, um ein Objekt (4) der Objekte (O1, O2, O3, ...) nach dem anderen entlang der Hauptrichtung (D) in einem zuvor bestimmten gegenseitigen Abstand zu halten und in einer Reihe vorwärtszubewegen, wobei die Achse (X) im Wesentlichen parallel zu ihr selbst und zu einer Tragebene (P) beibehalten wird, auf der die Handhabungsvorrichtung (1) in Verwendung ruht, die Handhabungsvorrichtung (1; 101; 201) ferner umfassend eine Fertigbearbeitungseinheit (29; 129; 229), in der im Anschluss an den Verarbeitungsvorgang ein Fertigbearbeitungsvorgang an den Objekten (O1, O2, O3, ...) ausgeführt wird, um Formfehler der Objekte zu verringern, wobei die Fertigbearbeitungseinheit (29; 129; 229) durch das Förderteil (16; 116; 216) durchquert wird, wobei die Fertigbearbeitungseinheit (29; 129; 229) eine Wärmebehandlungseinheit zum Wärmebehandeln der Objekte (O1, O2, O3, ...) und zum Bereitstellen von Wärme an die Objekte umfasst, wobei die Förderbaugruppe (15; 115; 215) mit einer Kante (27) versehen ist, die zum Einschränken von Verschiebungen der Objekte entlang ihrer jeweiligen Achsen (X) angeordnet ist, wenn die Objekte durch die Förderbaugruppe (15; 115; 215) gefördert werden.

2. Handhabungsvorrichtung (1; 101; 201) nach Anspruch 1, wobei das Haltemittel (20; 220) eine Vielzahl von Handhabungselementen (21; 221) umfasst, die auf dem Förderteil (16; 216) in einem zuvor bestimmten Abstand voneinander entlang der Schleife montiert sind, wobei jedes Handhabungselement (21; 221) der Vielzahl von Handhabungselementen ausgelegt ist, um mit einem einzelnen Objekt (4) zusammenzuwirken, und umfassend:
einen Vorsprung (25), der konfiguriert ist, um in dem offenen Hohlraum (6) empfangen zu werden; oder
ein hohles Gehäuse (246), das konfiguriert ist, um eine Seitenwand (42) des Körpers (5) außerhalb des offenen Hohlraums (6) mindestens teilweise zu umgeben.

3. Handhabungsvorrichtung (1; 101; 201) nach Anspruch 2, wobei der Vorsprung (25) eine vordere Oberfläche (25a) umfasst, die im Wesentlichen eben ist und angeordnet ist, um einer Bodenwand (40) des offenen Hohlraums (6) innerhalb des offenen Hohlraums (6) zugewandt zu sein, oder wobei das hohle Gehäuse (246) eine vordere Oberfläche (225a) umfasst, die im Wesentlichen eben ist und angeordnet ist, um einer Bodenwand (40) des offenen Hohlraums (6) außerhalb des offenen Hohlraums (6) zugewandt zu sein.

4. Handhabungsvorrichtung (1; 101; 201) nach einem der Ansprüche 2 bis 3, wobei:
der Vorsprung (25) eine Kontaktoberfläche (25b) umfasst, die den Vorsprung (25) seitlich begrenzt und die angeordnet ist, um mit einer Seitenwand des offenen Hohlraums (6) im Inneren des offenen Hohlraums (6) zusammenzuwirken, um das Objekt (4) entlang der Hauptrichtung (D) zu schieben; oder
das hohle Gehäuse (246) eine Kontaktoberfläche (225b) umfasst, die einen Hohlraum des hohlen Gehäuses (246) seitlich begrenzt und die angeordnet ist, um mit einer Seitenwand des offenen Hohlraums (6) außerhalb des offenen Hohlraums (6) zusammenzuwirken, um das Objekt (4) entlang der Hauptrichtung (D) zu schieben.

5. Handhabungsvorrichtung (1; 101; 201) nach einem der Ansprüche 2 bis 4, wobei der Vorsprung (25) mit einem stielartigen Abschnitt (24), der sich von dem Förderteil (16) erhebt, verbunden ist und davon vorspringt.

6. Handhabungsvorrichtung (1; 101; 201) nach Anspruch 5, wobei das Förderteil (16) eine Kette (17) umfasst, die durch einen Motor antreibbar ist, und der stielartige Abschnitt (24) eine Platte (24a) umfasst, die sich in Richtung des Vorsprungs (25) verjüngt und mit einer Befestigungsplatte (22) verbunden ist, die an der Kette (17) montiert ist; oder wobei das Förderteil (16) eine Kette (17) umfasst, die durch einen Motor antreibbar ist, und der stielartige Abschnitt (24) eine Platte (24a) umfasst, die sich in Richtung des Vorsprungs (25) verjüngt und mit einer Befestigungsplatte (22) verbunden ist, die an der Kette (17) montiert ist, und die Handhabungselemente (21) abwechselnd an Kettengliedern der Kette (17) montiert sind, sodass zwei nachfolgende Handhabungselemente jeweils an einem inneren Glied und an einem äußeren Glied der Kette (17) montiert sind.

7. Handhabungsvorrichtung (1; 101; 201) nach einem der Ansprüche 2 bis 4, wobei das hohle Gehäuse (246) einen Hohlkörper umfasst, der mit dem Förderteil (216) verbunden ist und außerhalb der Schleife davon vorspringt, das Förderteil (216) umfassend ein Band (217), das mit einer Vielzahl von Sauglöchern (217b) versehen ist, die in Fluidkommunikation mit entsprechenden Öffnungen (246a) stehen, die in einem jeweiligen hohlen Gehäuse (246) bereitgestellt sind, und die Haltemittel (220) ferner umfassend Saugmittel, die mit den Sauglöchern (217b) verbunden sind, zum Halten des Objekts (4) mittels Niederdrücken in einem jeweiligen hohlen Gehäuse (246).

8. Handhabungsvorrichtung (1; 101; 201) nach einem der vorstehenden Ansprüche, wobei die Förderbaugruppe (15; 115; 215) mit einer Hilfskante (28) versehen ist, die zum Tragen eines Abschnitts (7) des Objekts (4), der sich außerhalb des offenen Hohlraums (6) befindet und aus einem Umfang des Körpers (5) hervortritt, während des Förderns des Objekts (4) angeordnet ist.

9. Handhabungsvorrichtung (201) nach einem der vorstehenden Ansprüche, wobei die Förderbaugruppe (215) ferner eine rotierbare Transferscheibe (243), stromaufwärts der Fertigbearbeitungseinheit (229), zum Empfangen der Objekte von der Verarbeitungsstation (202) umfasst oder die Förderbaugruppe (215) ferner eine rotierbare Transferscheibe (243), stromaufwärts der Fertigbearbeitungseinheit (229), zum Empfangen der Objekte von der Verarbeitungsstation (202) umfasst und das Förderteil (216) sich mindestens teilweise um die rotierbare Transferscheibe (243) windet.

10. Handhabungsvorrichtung (1; 101; 201) nach einem der vorstehenden Ansprüche, wobei sich das Förderteil (16; 116; 216) entlang der Fertigbearbeitungseinheit (29; 129; 229) bis zu einer Ausgabezone (U) der Handhabungsvorrichtung (1; 101; 201) erstreckt, wobei die Ausgabezone (U) mit einem Förderband (10) verbindbar ist, das in der Prüfstation (3; 103) bereitgestellt wird, das die Prüfstation (3; 103) mit den fertigen Objekten (O1, O2, O3, ...) versorgt, die von dem Förderteil (16; 116) kommen; oder wobei die Prüfstation (203) in der Handhabungsvorrichtung (201) eingeschlossen ist, wobei die Prüfstation (203) durch das Förderteil (216) durchquert und versorgt wird.

11. Handhabungsvorrichtung (1; 101; 201) nach einem der vorstehenden Ansprüche, und ferner umfassend Steuermittel zum Steuern der Geschwindigkeit des Förderteils (16; 116; 216), das durch einen Motor antreibbar ist, sodass die Haltemittel (20; 120; 220) ein Objekt zu einer Zeit in Koordination mit der Ankunft einer Aufnahme (9; 109; 209) des Drehtisches (43; 143; 208) der Verarbeitungsstation (2; 102; 202) empfangen, von dem das Objekt (4) kommt, das die Förderbaugruppe (15; 115; 215) erreicht, wobei der Drehtisch (43; 143; 208) eine Vielzahl von Aufnahmen (9; 109; 209), die winkelmäßig voneinander beabstandet angeordnet sind, zum Unterbringen jeweils eines Objekts (4) aufweist.

12. Handhabungsvorrichtung (1; 101; 201) nach Anspruch 1, und ferner umfassend eine Kühleinrichtung (37; 137; 237) zum Kühlen des Förderteils (16; 116; 216) und die entlang eines Trägers (M) des Förderteils angeordnet ist, der sich von einem weiteren Träger (N) unterscheidet, dem die Wärmebehandlungseinheit zugewandt ist.

13. Handhabungsvorrichtung (1; 101; 201) nach Anspruch 1 oder 12, wobei die Objekte (O1, O2, O3, ...) Aufreißringdeckel (4) umfassen, bei denen der Aufreißring (7) aus Kunststoff besteht, die Verarbeitungsstation (2; 102; 202) eine Formpressstation zum Formpressen des Aufreißrings (7) umfasst und die Wärmebehandlungseinheit mindestens ein Erwärmungselement (31) zum Erwärmen des Aufreißrings (7) nach dem Formpressen umfasst, sodass beliebige Grate, die auf dem Aufreißring (7) vorhanden sind, darauf zusammenfallen.

14. Handhabungsverfahren zum Handhaben von Objekten (O1, O2, O3, ...) stromabwärts eines Drehtisches (43; 143; 208) einer Verarbeitungsstation (2; 102; 202), die angeordnet ist, um einen Verarbeitungsvorgang an den Objekten (O1, O2, O3, ...) durchzuführen, und stromaufwärts eines Prüfschritts (3; 103; 203) der Objekte (O1, O2, O3, ...), wobei jedes Objekt (4) der Objekte (O1, O2, O3, ...) mit einem Körper (5) versehen ist, in dem ein offener Hohlraum (6) definiert ist, der sich entlang einer Achse (X) erstreckt, das Handhabungsverfahren umfassend das Fördern der Objekte (O1, O2, O3, ...) entlang einer Hauptrichtung (D), **dadurch gekennzeichnet, dass** das Fördern das Empfangen der Objekte von dem Drehtisch (43; 143; 208), das Halten eines Objekts (4) der Objekte (O1, O2, O3, ...) zu einer Zeit auf einem bewegbaren, schleifenförmigen Förderteil (16; 116; 216), das Antreiben des Förderteils (16; 116; 216) zum Vorwärtsbewegen in einer Reihe eines Objekts der Objekte (O1, O2, O3, ...) nach dem anderen entlang der Hauptrichtung (D) in einem zuvor bestimmten gegenseitigen Abstand umfasst, wobei die Achse (X) im Wesentlichen horizontal und parallel zu ihr selbst beibehalten wird, und ferner das Ausführen eines Fertigbearbeitungsvorgangs an den Objekten (O1, O2, O3, ...) zum Reduzieren von Formfehlern der Objekte im Anschluss an den Verarbeitungsvorgang umfasst, wobei der Fertigbearbeitungsvorgang während des Vorwärtsbewegens in einer Reihe stattfindet, wobei eine Einschränkung der Verschiebungen der Objekte entlang ihrer jeweiligen Achsen (X) bereitgestellt wird, während die Objekte gefördert werden.

15. Handhabungsverfahren nach Anspruch 14, wobei das Vorwärtsbewegen in einer Reihe das Steuern der Geschwindigkeit des Förderteils (16; 116; 216) umfasst, sodass das Empfangen der Objekte phasenkoordiniert mit der Ankunft einer Aufnahme (9; 109; 209) des Drehtisches (43; 143; 208) stattfindet, von dem das Objekt kommt, wobei der Drehtisch (43; 143; 208) eine Vielzahl von Aufnahmen (9; 109; 209), die winkelmäßig voneinander beabstandet angeordnet sind, zum Unterbringen jeweils eines Objekts (4), aufweist.

16. Handhabungsverfahren nach Anspruch 14 oder 15, wobei das Halten ein Einsetzen eines Vorsprungs (25) in den offenen Hohlraum (6) oder das Umgeben des Körpers (5) mit einem hohlen Gehäuse (246) oder das Halten mittels Niederdrücken durch das Förderteil (16; 116; 216) oder das Einsetzen eines Vorsprungs (25) in den offenen Hohlraum (6) und das Halten mittels Niederdrücken durch das Förderteil (16; 116; 216) oder das Umgeben des Körpers (5) mit einem hohlen Gehäuse (246) und das Halten mittels Niederdrücken durch das Förderteil (16; 116; 216) umfasst.

17. Handhabungsverfahren nach einem der Ansprüche 14 bis 16, wobei die Objekte (O1, O2, O3, ...) Aufreißringdeckel (4) umfassen, bei denen der Aufreißring (7) aus Kunststoff besteht, wobei das Verarbeiten ein Formgebungsschritt des Aufreißrings (7) durch Formpressen ist und wobei der Fertigbearbeitungsvorgang das Erwärmen des Aufreißrings (7) nach dem Formpressen umfasst, sodass beliebige Grate, die auf dem Aufreißring (7) vorhanden sind, darauf zusammenfallen.

## Revendications

1. Appareil de manipulation permettant de manipuler des objets (O1, O2, O3, ...) allant d'un plateau tournant (43; 143; 208) d'un poste de traitement (2; 102; 202) agencé pour mettre en œuvre une opération de traitement sur lesdits objets (O1, O2, O3, ...) à un poste d'inspection (3; 103; 203) agencé en aval dudit poste de traitement (2) pour l'inspection desdits objets (O1, O2, O3, ...), chaque objet (4) desdits objets (O1, O2, O3, ...) étant pourvu d'un corps (5) dans lequel une cavité ouverte (6) s'étendant le long d'un axe (X) est définie, ledit appareil de manipulation (1; 101; 201) comprenant un ensemble de transport (15; 115; 215) permettant de transporter lesdits objets (O1, O2, O3, ...) le long d'une direction principale (D), **caractérisé en ce que** ledit ensemble de transport (15; 115; 215) comprend un organe de transport mobile à boucle fermée (16; 116; 216) et un moyen de maintien (20; 120; 220) adapté pour maintenir et faire avancer en une rangée un objet (4) desdits objets (O1, O2, O3, ...) après un autre le long de ladite direction principale (D) à une distance mutuelle prédéterminée, en gardant ledit axe (X) sensiblement parallèle à lui-même et à un plan de support (P) sur lequel ledit appareil de manipulation (1) repose en cours d'utilisation, ledit appareil de manipulation (1; 101; 201) comprenant en outre une unité de finition (29; 129; 229), dans laquelle une opération de finition est effectuée sur lesdits objets (O1, O2, O3, ...) à la suite de ladite opération de traitement afin de réduire des défauts de forme desdits objets, ladite unité de finition (29; 129; 229) étant croisée par ledit organe de transport (16; 116; 216), ladite unité de finition (29; 129; 229) comportant une unité de traitement thermique permettant de traiter thermiquement lesdits objets (O1, O2, O3, ...), et de fournir de la chaleur auxdits objets, dans lequel ledit ensemble de transport (15; 115; 215) est pourvu d'un bord (27) agencé pour limiter des déplacements desdits objets le long des axes respectifs (X) de ceux-ci à mesure que lesdits objets sont transportés par ledit ensemble de transport (15; 115; 215).

2. Appareil de manipulation (1; 101; 201) selon la revendication 1, dans lequel ledit moyen de maintien (20; 220) comprend une pluralité d'éléments de manipulation (21; 221) montés sur ledit organe de transport (16; 216) à une distance prédéterminée les uns des autres le long de ladite boucle, chaque élément de manipulation (21; 221) de ladite pluralité d'éléments de manipulation étant destinée à interagir avec un unique objet (4) et comprenant :
une partie saillante (25) conçue pour être reçue dans ladite cavité ouverte (6); ou
un logement creux (246) conçu pour entourer au moins partiellement une paroi latérale (42) dudit corps (5) à l'extérieur de ladite cavité ouverte (6).

3. Appareil de manipulation (1; 101; 201) selon la revendication 2, dans lequel ladite partie saillante (25) comprend une surface avant (25a) qui est sensiblement plane et agencée pour faire face à une paroi inférieure (40) de ladite cavité ouverte (6) à l'intérieur de ladite cavité ouverte (6) ou ledit logement creux (246) comprend une surface avant (225a) qui est sensiblement plane et agencée pour faire face à une paroi inférieure (40) de ladite cavité ouverte (6) à l'extérieur de ladite cavité ouverte (6).

4. Appareil de manipulation (1; 101; 201) selon l'une quelconque des revendications 2 à 3, dans lequel:
ladite partie saillante (25) comprend une surface de contact (25b) qui délimite latéralement ladite partie saillante (25) et qui est agencée pour interagir avec une paroi latérale de ladite cavité ouverte (6) à l'intérieur de ladite cavité ouverte (6) pour pousser ledit objet (4) le long de ladite direction principale (D); ou
ledit logement creux (246) comprend une surface de contact (225b) qui délimite latéralement un creux dudit logement creux (246) et qui est agencée pour interagir avec une paroi latérale de ladite cavité ouverte (6) à l'extérieur de ladite cavité ouverte (6) pour pousser ledit objet (4) le long de ladite direction principale (D).

5. Appareil de manipulation (1; 101; 201) selon l'une quelconque des revendications 2 à 4, dans lequel ladite partie saillante (25) est reliée à, et fait saillie de, une partie de type tige (24) qui s'élève dudit organe de transport (16).

6. Appareil de manipulation (1; 101; 201) selon la revendication 5, dans lequel ledit organe de transport (16) comprend une chaîne (17) pouvant être entraînée par un moteur et ladite partie de type tige (24) comprend une plaque (24a) effilée en direction de ladite partie saillante (25) et reliée à une plaque de fixation (22) montée sur ladite chaîne (17); ou dans lequel ledit organe de transport (16) comprend une chaîne (17) pouvant être entraînée par un moteur et ladite partie de type tige (24) comprend une plaque (24a) effilée en direction de ladite partie saillante (25) et reliée à une plaque de fixation (22) montée sur ladite chaîne (17) et lesdits éléments de manipulation (21) sont montés en alternance sur des maillons de chaîne de ladite chaîne (17) de sorte que deux éléments de manipulation consécutifs sont montés respectivement à un maillon interne et à un maillon externe de ladite chaîne (17).

7. Appareil de manipulation (1; 101; 201) selon l'une quelconque des revendications 2 à 4, dans lequel ledit logement creux (246) comprend un corps creux relié audit, et faisant saillie dudit, organe de transport (216), à l'extérieur de ladite boucle, ledit organe de transport (216) comprenant une bande (217) pourvue d'une pluralité de trous d'aspiration (217b) agencés en communication fluidique avec des ouvertures correspondantes (246a) fournies dans un logement creux (246) respectif et ledit moyen de maintien (220) comprenant en outre un moyen d'aspiration raccordé auxdits trous d'aspiration (217b) permettant de maintenir au moyen d'une dépression ledit objet (4) dans un logement creux (246) respectif.

8. Appareil de manipulation (1; 101; 201) selon l'une quelconque revendication précédente, dans lequel ledit ensemble de transport (15; 115; 215) est pourvu d'un bord auxiliaire (28) agencé pour supporter une partie (7) dudit objet (4) à l'extérieur de ladite cavité ouverte (6) et émergeant d'une périphérie dudit corps (5), pendant le transport dudit objet (4).

9. Appareil de manipulation (201) selon l'une quelconque revendication précédente, dans lequel ledit ensemble de transport (215) comprend en outre un disque de transfert rotatif (243), en amont de ladite unité de finition (229), permettant de recevoir lesdits objets en provenance dudit poste de traitement (202) ou ledit ensemble de transport (215) comprend en outre un disque de transfert rotatif (243), en amont de ladite unité de finition (229), permettant de recevoir lesdits objets en provenance dudit poste de traitement (202) et ledit organe de transport (216) s'enroule au moins partiellement autour dudit disque de transfert rotatif (243).

10. Appareil de manipulation (1; 101; 201) selon l'une quelconque revendication précédente, dans lequel ledit organe de transport (16; 116; 216) s'étend le long de ladite unité de finition (29; 129; 229) jusqu'à une zone de sortie (U) dudit appareil de manipulation (1; 101; 201), ladite zone de sortie (U) pouvant être reliée à une bande transporteuse (10) fournie dans ledit poste d'inspection (3; 103) qui alimente ledit poste d'inspection (3; 103) avec lesdits objets finis (O1, O2, O3, ...) venant dudit organe de transport (16; 116); ou dans lequel ledit poste d'inspection (203) est inclus dans ledit appareil de manipulation (201), ledit poste d'inspection (203) étant croisé et alimenté par ledit organe de transport (216).

11. Appareil de manipulation (1; 101; 201) selon l'une quelconque revendication précédente, et comprenant en outre un moyen de commande permettant de commander la vitesse dudit organe de transport (16; 116; 216) pouvant être entraîné par un moteur de sorte que ledit moyen de maintien (20; 120; 220) reçoit un objet à la fois en coordination avec l'arrivée d'un emplacement (9; 109; 209) dudit plateau tournant (43; 143; 208) dudit poste de traitement (2; 102; 202) duquel ledit objet (4) arrive pour atteindre ledit ensemble de transport (15; 115; 215), ledit plateau tournant (43; 143; 208) ayant une pluralité d'emplacements (9; 109; 209) agencés avec un espacement angulaire les uns par rapport aux autres, destinés à loger chacun un objet (4).

12. Appareil de manipulation (1; 101; 201) selon la revendication 1, et comprenant en outre un dispositif de refroidissement (37; 137; 237) permettant de refroidir ledit organe de transport (16; 116; 216) et agencé le long d'une poutre (M) dudit organe de transport, distincte d'une autre poutre (N) sur laquelle ladite unité de traitement thermique fait face.

13. Appareil de manipulation (1; 101; 201) selon la revendication 1 ou 12, dans lequel lesdits objets (O1, O2, O3, ...) comprennent des capsules à anneau de traction (4) dans lesquelles ledit anneau de traction (7) est constitué de matières plastiques, ledit poste de traitement (2; 102; 202) comprend un poste de moulage par compression permettant de mouler par compression ledit anneau de traction (7) et ladite unité de traitement thermique comprend au moins un élément chauffant (31) permettant de chauffer ledit anneau de traction (7) après ledit moulage par compression de sorte que d'éventuelles bavures présentes sur ledit anneau de traction (7) retombent sur celui-ci.

14. Procédé de manipulation permettant de manipuler des objets (O1, O2, O3, ...) en aval d'un plateau tournant (43; 143; 208) d'un poste de traitement (2; 102; 202) agencé pour mettre en œuvre une opération de traitement sur lesdits objets (O1, O2, O3, ...) et en amont d'une étape d'inspection (3; 103; 203) desdits objets (O1, O2, O3, ...), chaque objet (4) desdits objets (O1, O2, O3, ...) étant pourvu d'un corps (5) dans lequel une cavité ouverte (6) s'étendant le long d'un axe (X) est définie, ledit procédé de manipulation comprenant le transport desdits objets (O1, O2, O3, ...) le long d'une direction principale (D), **caractérisé en ce que** ledit transport comprend la réception desdits objets en provenance dudit plateau tournant (43; 143; 208), le maintien d'un objet (4) desdits objets (O1, O2, O3, ...) à la fois sur un organe de transport mobile à boucle fermée (16; 116; 216), l'entraînement dudit organe de transport (16; 116; 216) pour faire avancer en une rangée un objet desdits objets (O1, O2, O3, ...) après un autre le long de ladite direction principale (D) à une distance mutuelle prédéterminée, en gardant ledit axe (X) sensiblement horizontal et parallèle à lui-même, et comprend en outre la réalisation d'une opération de finition sur lesdits objets (O1, O2, O3, ...) permettant de réduire des défauts de forme desdits objets à la suite de ladite opération de traitement, ladite opération de finition se produisant pendant ledit avancement en une rangée, dans lequel on fournit des déplacements limitants desdits objets le long des axes respectifs (X) de celui-ci à mesure que lesdits objets sont transportés.

15. Procédé de manipulation selon la revendication 14, dans lequel ledit avancement en une rangée comprend la commande de la vitesse dudit organe de transport (16; 116; 216) de sorte que ladite réception desdits objets se produit en coordination de phase avec l'arrivée d'un emplacement (9; 109; 209) dudit plateau tournant (43; 143; 208) d'où provient ledit objet, ledit plateau tournant (43; 143; 208) ayant une pluralité d'emplacements (9; 109; 209) agencés avec un espacement angulaire les uns par rapport aux autres, destinés à loger chacun un objet (4).

16. Procédé de manipulation selon la revendication 14 ou 15, dans lequel ledit maintien comprend l'insertion d'une partie saillante (25) dans ladite cavité ouverte (6) ou le fait d'entourer ledit corps (5) avec un logement creux (246) ou le maintien au moyen d'une dépression à travers ledit organe de transport (16; 116; 216) ou l'insertion d'une partie saillante (25) dans ladite cavité ouverte (6) et le maintien au moyen d'une dépression à travers ledit organe de transport (16; 116; 216) ou le fait d'entourer ledit corps (5) avec un logement creux (246) et le maintien au moyen d'une dépression à travers ledit organe de transport (16; 116; 216).

17. Procédé de manipulation selon l'une quelconque des revendications 14 à 16, dans lequel lesdits objets (O1, O2, O3, ...) comprennent des capsules à anneau de traction (4) dans lesquelles ledit anneau de traction (7) est constitué de matières plastiques, ledit traitement est une étape de formation dudit anneau de traction (7) par moulage par compression et ladite opération de finition comprend un chauffage dudit anneau de traction (7) après ledit moulage par compression de sorte que d'éventuelles bavures présentes sur ledit anneau de traction (7) retombent sur celui-ci.
